# EUROPEAN PATENT SPECIFICATION

(11) **EP 2 550 994 B1**
(45) Date of publication and mention of the grant of the patent: **02.07.2014**
(21) Application number: 11175253.1
(22) Date of filing: 25.07.2011
(51) Int. Cl.: A62B 7/14, A62B 9/02, A62B 17/00, B64D 10/00

(54) **A regulation valve for a life support system**
Regelventil für ein Lebenserhaltungssystem
Soupape de régulation pour système de survie

(43) Date of publication of application: 30.01.2013
(73) Proprietor: INTERTECHNIQUE, 78373 Plaisir Cedex (FR)
(72) Inventor: Rittner, Wolfgang, 23623 Ahrensbök (DE); Meckes, Rüdiger, 23919 Berkenthin (DE)
(74) Representative: Eisenführ Speiser

(56) References cited:
- DE-A1- 2 046 016
- GB-A- 861 720
- GB-A- 907 390
- GB-A- 1 003 401

## Description

The invention relates to a regulation valve for a life support system for use in an aircraft cabin, in particular for life support of a pilot, crew member or a passenger in an aircraft cabin.

Several kinds of support systems are known for supporting pilots in an aircraft cabin see for example GB1003401. In one type of these systems a so called OBOGS (On-Board Oxygen Generating System) unit supplies the pilot with oxygen extracted from bleed air taken from the aircraft engines.

Today's life support systems for aircraft pilots with an OBOGS unit comprise a T-piece that connects a channel for breathable gas with a pressure vest. In case of rapid decompression, I.e. rapid decrease of pressure, in the aircraft cabin it is important for life support of the pilot to supply the pilot with air having a high oxygen concentration so that the pilot is prevented from getting unconscious. The air with high oxygen concentration is provided by a separate oxygen backup unit. Often, such oxygen is provided to the pilot at increased pressure to optimize oxygen uptake in the lung of the pilot. In such a case, the pilot preferably wears a tight, pressurized vest to facilitate breathing action and to prevent injuries of the chest resulting from high pressure ventilation.

Furthermore, life support systems are known comprising a non-return pressure vest valve, wherein air from inside the pressure vest is exhausted through the valve to the environment when the pilot wearing the pressure vest breathes in at a predetermined ambient pressure. When the pilot exhales, the pressure vest is filled with breathable air from the air supply. With each breathing cycle, the air in the pressure vest is partly exhausted to the environment, i.e. breathable air in the pressure vest is exchanged slightly during breathing.

However, in existing life support systems it has been observed that pilots cannot stay conscious in critical situations where a decompression event and heavy impact like G-loads occur.

It is object of the invention to enhance the existing life support systems and to prevent unconsciousness of the pilot in such critical situations.

According to the invention, a regulation valve for a life support system for use in an aircraft cabin comprises: a gas inlet for breathable gas, an air mask supply outlet connected to the gas inlet and adapted to direct breathable gas to an air mask, a pressure vest branch interconnected between the gas inlet and an opening for connecting to a pressure vest and adapted to direct breathable gas to and from the pressure vest, a decompression valve adapted to inhibit gas flow from the pressure vest branch to the air mask supply outlet if pressure in the aircraft cabin decreases below a predetermined value, a one-way valve adapted to inhibit gas flow from the pressure vest branch to the air mask supply outlet at a predetermined pressure difference between the pressure vest branch and the gas inlet and a one-way dump valve adapted to direct gas from the pressure vest branch to the environment at a predetermined pressure difference between the pressure vest branch and the gas inlet.

It has been discovered by the invention, that in case of rapid decompression in a state of the art life support system, the direct connection of the pressure vest with the breathable gas channel through the T-piece leads to a dead volume of air with low oxygen concentration in the pressure vest. This dead volume of air first must be consumed, i.e. inhaled and exhaled, by the pilot. A fast supply with air of high oxygen concentration is hindered by this setup. This is identified as a significant factor of a delay in the supply of air with high oxygen concentration to the pilot and, thereby, as a reason for a possible unconsciousness of the pilot.

The regulation valve of the invention provides for a direct supply of oxygen enriched air to the pilot. Moreover, it allows that in a short period of time, the air in the pressure vest with low oxygen concentration is exchanged with high oxygen concentration air.

According to a first preferred embodiment, the regulation valve comprises a pressure feed duct adapted to direct pressurized air from the gas inlet to the dump valve in a way that the dump valve opens at a predetermined pressure difference between the pressure vest branch and the gas inlet. Such pressure feed duct could be provided as an internal channel within a valve housing or as a tube or pipe connected to an inlet and/or an outlet of such a valve housing. Thereby, a self-controlled and purposeful way of regulating the dump valve is provided.

According to a further embodiment, the decompression valve is connected to a membrane which is coupled to the pressure in the aircraft cabin in a way that the decompression valve closes if the pressure in the aircraft cabin decreases rapidly. Thereby, a direct and intelligent way of controlling the decompression valve depending on the pressure in the aircraft, e.g. the cabin pressure is achieved.

A further embodiment is characterized in that a space on one side of the membrane is connected with an opening to the aircraft cabin in a way that a pressure difference between two sides of the membrane is compensated after a predetermined time for opening the decompression valve.

In particular, it is preferred that the membrane is embedded in a membrane housing. On each side of the membrane, a space is connected to the aircraft cabin by an opening in the membrane housing. The openings can have different sizes of cross section. The membrane is arranged in a way that in case of rapid decompression the pressure on a first side of the membrane decreases rapidly and on a second side of the membrane decreases slowly since the opening on the second side in the housing is smaller than the opening on the first side in the housing. When the pressure on the second side of the membrane has decreased sufficiently, the decompression valve opens.

A further preferred embodiment is characterized in that the decompression valve, the one-way valve and/or the one-way dump valve are integrated in a valve housing, preferably in the pressure vest branch.

Preferably, the gas inlet selectively receives breathable gas from an on-board oxygen generating system and/or from an oxygen backup unit which provides breathable air with a high oxygen concentration. During normal operation, i.e. normal pressure conditions in the aircraft cabin, the gas inlet receives breathable gas from the on-board generating system with a reasonable oxygen concentration and pressure, e.g. depending on the current altitude of the airplane. The on-board oxygen generating system can be supplied with air from a bleed air source. The bleed air can be obtained from the aircraft engine. Thereby, separate air container tanks for the supply of breathable are during normal operation are not necessary.

In case of a rapid decompression in the aircraft cabin the flow of breathable air from the on-board oxygen generating system to the gas inlet is inhibited. Furthermore, an oxygen backup unit is engaged to provide the gas inlet with breathable gas having a high oxygen concentration. The oxygen backup unit can obtain breathable gas from an oxygen tank with dimensions adapted for providing enough oxygen during critical decompression situations.

A further aspect of the invention is a life support system for use in an aircraft cabin comprising: a pressure vest, an air mask, a breathing regulator comprising a gas regulation inlet for breathable gas and a gas regulation outlet connected to the regulation valve and adapted to direct breathable gas to a regulation valve, wherein the breathing regulator is adapted to control the pressure in the regulation outlet (55), and the regulation valve comprising: a gas inlet for breathable gas, an air mask supply outlet connected to the gas inlet and adapted to direct breathable gas to an air mask, a pressure vest branch interconnected between the gas inlet and an opening for connecting to a pressure vest and adapted to direct breathable gas to and from the pressure vest, a decompression valve adapted to inhibit gas flow from the pressure vest branch to the air mask supply outlet if pressure in the aircraft cabin decreases below a predetermined value, a one-way valve adapted to inhibit gas flow from the pressure vest branch to the air mask supply outlet at a predetermined pressure difference between the pressure vest branch and the gas inlet and a one-way dump valve adapted to direct gas from the pressure vest branch to the environment at a predetermined pressure difference between the pressure vest branch and the gas inlet.

Thereby, a simple and safe system for supplying the pilot with breathable air in case of rapid decompression is provided.

The breathing regulator provides for a safe and comfortable supply of breathable air to the pilot through pressure control. Preferably, the breathing regulator is adapted to control the pressure in the regulation outlet according to the altitude of the aircraft. Therefore, the breathing regulator can make use of a pressure signal from a pressure sensor arranged the outside of the aircraft. Further preferably, the breathing regulator is adapted to control the pressure in the regulation outlet according to the pressure in the aircraft cabin. Thereby, the pressure of breathable gas directed to the air mask can be adapted to the pressure in the aircraft cabin.

A preferred embodiment comprises an anti-g regulator unit adapted to direct pressurized gas to an anti-g suit which is supplied with gas from the breathing regulator and wherein the anti-g regulator unit is coupled to the breathing regulator in a way the anti-g suit is pressurized if the breathable gas pressure is increased. This provides for life support of the pilot in critical situations, especially, with high levels of acceleration forces acting on the pilot.

According to a further preferred embodiment, the breathing regulator comprises a pressure sensor and/or an oxygen sensor adapted to monitor the life support system, wherein an electronic control unit receives a pressure signal from the pressure sensor and/or an oxygen signal from the oxygen sensor for monitoring and/or controlling the breathing regulator. Thereby, for example, the system performance of the breathing regulator can be monitored. This provides for a simple and safe way of monitoring the pressure and the oxygen concentration of breathable air supplied to the regulation valve inlet and, therewith, the pilot. The electronic control unit can be supplied with power by an aircraft power supply.

Preferably, a display unit is adapted to provide information concerning the life support system to a pilot. This provides for information and monitoring means to the pilot. In case of system performance problems and failures, the pilot is enabled to trigger certain problem solving provisions. Preferably, the display unit is electrically connected to the electronic control unit in a way that the display unit can be controlled by the electronic control unit.

A further embodiment is characterized in that the life-support system comprises an on-board oxygen generating system adapted to supply the breathing regulator with breathable gas and a bleed air source adapted to supply the on-board oxygen generating system with breathable gas. This provides for a simple and preferred means for providing oxygen to the life support system. Moreover a simple, effective and weight saving means for generating oxygen on-board is provided.

In another preferred embodiment, the life support system comprises an oxygen backup unit adapted to supply the breathing regulator with breathable oxygen enriched air if the pressure in the aircraft cabin decreases, wherein the breathing regulator inhibits gas flow from the oxygen generating system if pressure in the aircraft cabin decreases. This provides for an alternative means for supplying oxygen to a pilot. Especially in case of rapid decompression in the aircraft cabin, the oxygen backup unit can be adapted to supply the pilot with breathable air of high oxygen concentration. Moreover, only oxygen enriched air from the oxygen backup unit is directed to the gas inlet of the regulation valve.

According to another embodiment the life support system comprises an actuator adapted to close the decompression valve if the pressure in the aircraft cabin decreases rapidly. Thereby, an automated closing mechanism is provided for insulating the pressure vest in case of rapid decompression. Preferably, a pressure sensor is connected to an electronic control unit. If the pressure sensor detects a rapid decompression in the aircraft cabin, a corresponding signal is sent to the electronic control unit. The electronic control unit then activates an actuator which closes the decompression valve. After a predetermined time, the electronic control unit activates the actuator to open the decompression valve.

A further aspect of the invention is a method for operating a regulation valve for a life support system for use in an aircraft cabin, comprising the steps of:
- directing breathable gas from a gas inlet to an air mask supply outlet and to a pressure vest branch adapted to direct breathable gas to and from a pressure vest,
- insulating the pressure vest for a predetermined time if the pressure in the aircraft cabin decreases, in a way that
- gas flow from the pressure vest branch to the air mask supply outlet is inhibited,
- gas flow from the pressure vest branch is directed to the environment at a predetermined pressure difference between the pressure vest branch and the gas inlet and
- gas flow is directed to the pressure vest branch at a predetermined pressure difference between the gas inlet and the pressure vest branch.

In a preferred embodiment the method comprises the step of directing gas flow from the pressure vest branch to the air mask supply outlet at a predetermined time after insulating the pressure vest.

A further aspect of the invention is a method for operating a life support system for use in an aircraft cabin, comprising the steps of:
- directing breathable gas from a gas supply to an air mask and to a pressure vest and,
- if the pressure in the aircraft cabin decreases: directing oxygen enriched gas to the air mask and insulating the pressure vest, in a way that gas flow from the pressure vest to the air mask is inhibited, gas flow from the pressure vest is directed to the environment of the life support system and gas flow is directed to the pressure vest at a predetermined pressure difference between the gas supply and the pressure vest.

According to a preferred embodiment, the method comprises the step of directing gas flow from the pressure vest to the air mask at a predetermined time after insulating the pressure vest.

Preferably, the method comprises the step of directing gas to an anti-g suit.

A preferred embodiment of the invention is described in connection with the Figures, wherein
Fig. 1 is a schematic embodiment of a regulation valve according to the present invention and
Fig. 2 is a schematic embodiment of a life support system according to the present invention.

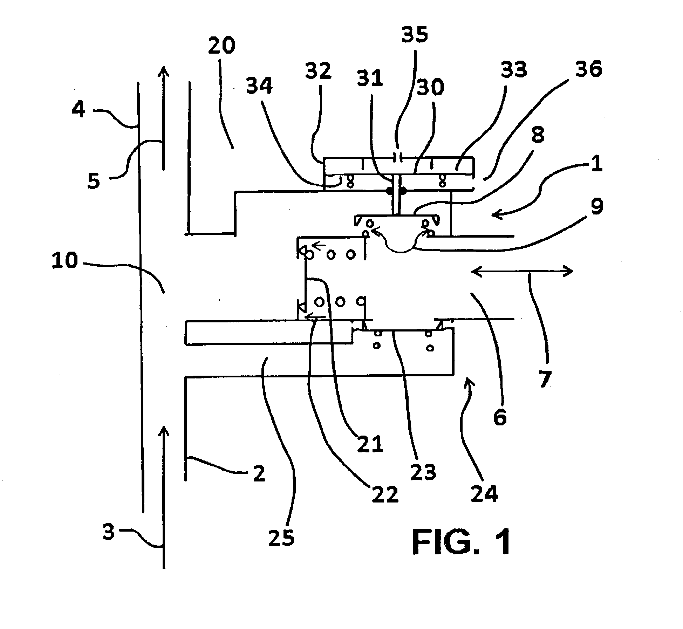

Fig 1 shows a regulation valve 1 according to a preferred embodiment of the invention comprising a gas inlet 2 for breathable gas 3 which originates from a breathing regulator not shown in Fig. 1. The regulation valve 1 further comprises an air mask supply outlet 4 for directing breathable gas 5 to an air mask not shown in Fig. 1. The gas inlet 2 and the air mask supply outlet 4 form a breathable gas branch 10. A pressure vest branch 6 is adapted to direct breathable gas 7 to and from a pressure vest not shown in Fig. 1.

The pressure vest branch 6 comprises a decompression valve 8 adapted to inhibit the gas flow 9 from the pressure vest branch 6 to the air mask supply outlet 4 if pressure in the aircraft cabin 20 decreases rapidly. The inhibition is achieved by closing the decompression valve 8.

The pressure vest branch 6 further comprises a one-way valve 21 adapted to open at a predetermined pressure difference between the breathable gas branch 10 and the pressure vest branch 6. When the one-way valve 21 is closed, gas flow 22 from the pressure vest branch 6 to the air mask supply outlet 4 is inhibited.

A one-way dump valve 23 is adapted to direct gas from the pressure vest branch 6 to the environment 24 at a predetermined pressure difference between the pressure vest branch 6 and the environment 24, e.g. the aircraft cabin 20. A pressure feed duct 25 is adapted to direct gas from the gas inlet 2 to the dump valve 23 in a way that the dump valve closes if the pressure difference between the gas inlet 2 and the pressure vest branch 6 reaches a predetermined value.

The decompression valve 8 is connected to a membrane 30 by a rod 31. The membrane 30 is coupled to the pressure in the aircraft cabin 20 in a way that the decompression valve 8 closes if the pressure in the aircraft cabin 20 decreases rapidly. This is achieved by a housing 32 which surrounds the membrane 30 wherein on each side 33 and 34 of the membrane 30 the housing 32 includes an opening 35 and 36, respectively. The opening 35 has a smaller cross-section than the opening 36 and thus functions as a throttle. During normal operation, a spring on the side 34 of the membrane 30 pushes the valve towards side 33 so that the decompression valve 8 is open. If the pressure in the aircraft cabin 20 decreases rapidly, the pressure on side 35 of the membrane decreases rapidly according to the cabin pressure 35 through opening and the decompression valve 8 closes. After a predetermined time the decompression valve opens up again after the low pressure has reached the other side of the membrane through opening 36 and thus the pressure difference between the two sides 33 and 34 of the membrane 30 is compensated after a predetermined time period.

The gas inlet 2 receives breathable gas 3 from an on-board oxygen generating system during normal operation. In a critical situation, e.g. when rapid decompression in the aircraft cabin occurs the gas inlet 2 receives breathable oxygen enriched air from an oxygen backup unit. Both systems are not shown in Fig. 1. The on-board oxygen generating system is supplied with bleed air from a bleed air source, e.g. an aircraft engine.

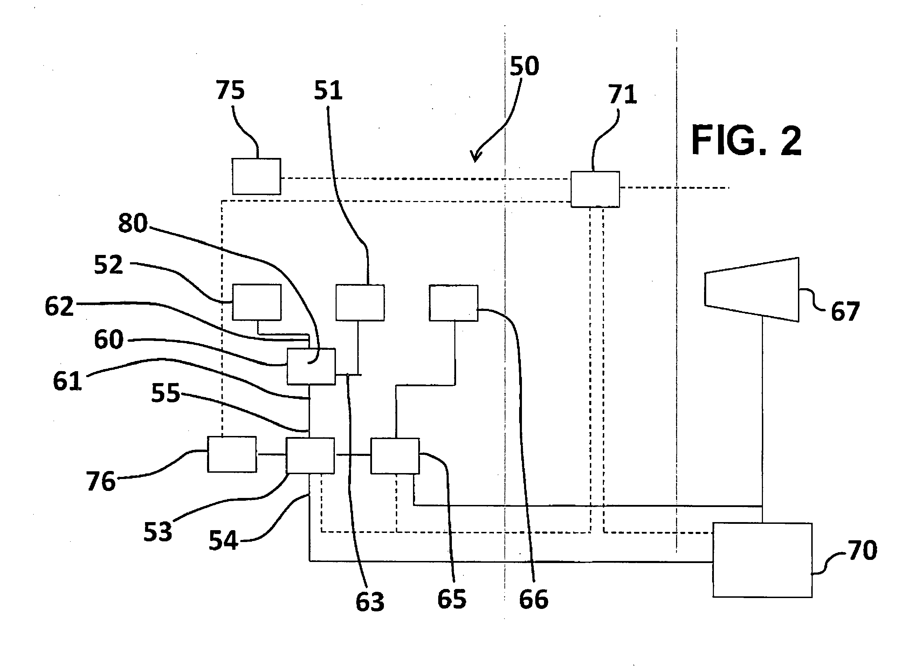

Fig. 2 shows a life support system 50 with a pressure vest 51 which can be worn by a pilot of the aircraft. An air mask 52 serves as an air supply for the pilot. A breathing regulator 53 comprises a gas regulation inlet 54 for breathable gas and a gas regulation outlet 55 adapted to direct breathable gas to a regulation valve 60. The breathing regulator 53 is adapted to regulate the breathable gas pressure according to the altitude of the aircraft.

The regulation valve 60 can comprise a gas inlet 61 for breathable gas and an air mask supply outlet 62 adapted to direct breathable gas to the air mask 52. The gas inlet 61 and the air mask outlet 62 form a breathable gas branch 80. Further, the regulation valve 60 comprises a pressure vest branch 63 adapted to direct breathable gas to and from the pressure vest 51. During normal operation the regulation valve 60 functions as a t-piece and serves as a direct connection of the gas inlet 61 with the gas outlet 62 and the pressure vest branch 63. Thus, the pressure vest serves under normal operation as a buffer to smooth system vibrations and, furthermore, as a breathing support for the pilot. The breathable gas, which flows into the vest during exhalation by the pilot, is pushed back into the system upon inhalation by the pilot.

The breathing regulator 53 comprises a pressure sensor adapted to monitor the system performance of the breathing regulator 53 and an oxygen sensor adapted to monitor the system performance of the breathing regulator 53.

An anti-g regulator unit 65 is adapted to direct pressurized air to an anti-g suit 66 which protects the pilot, for example, during curve maneuvers against high acceleration forces. Therefore, the anti-g suit is supplied with pressurized air from the anti-g regulator unit 65. The anti-g regulator unit 65 can be supplied with gas by the breathing regulator 53, e.g. by a direct pneumatic connection. Herein, the anti-g regulator unit 65 can be adapted to direct pressurized air to the anti-g suit 66 in case the breathing regulator 53 increases the pressure of the breathable gas directed to the regulation valve 60. Moreover the anti-g regulator unit 65 can be supplied with gas from a bleed air source 67. The bleed air source 67 can be an engine of the aircraft. Further, the anti-g regulator unit 65 can comprise pressure sensors for system monitoring functions.

An on-board oxygen generating system 70 is supplied with bleed air from the bleed air source 67. The bleed air is cleaned from free water, dust and contaminants in the on-board oxygen generating system 70. Further, the pressure of the bleed air is limited to an appropriate level. Pressure and temperature sensors can be installed in the on-board oxygen generating system 70 for system monitoring. The on-board oxygen generating system 70 is electrically connected to an electronic control unit 71 which is supplied with power by an aircraft power source. The electronic control unit 71 controls the on-board oxygen generating system 70.

In the on-board oxygen generating system 70 nitrogen contained in the bleed air is preferably separated from the air by a pressure swing adsorption and/or a pressure vacuum swing adsorption or other oxygen enriching methods. Thereby, oxygen enriched air can be produced and delivered to the breathing regulator 53.

The sensor signals of the pressure sensor and oxygen sensor arranged in the breathing regulator 53 are transmitted to the electronic control unit 71 for system monitoring. Measured system values or status signals may be sent to a display unit 75 adapted to provide information concerning system performance to a pilot.

In case of system failure, e.g. rapid decompression, the pilot or the electronic control unit 71 selects an oxygen backup unit 76 for supplying the breathing regulator 53 with oxygen directly, wherein the breathing regulator 53 can additionally increase the pressure of the breathable air directed to the regulation valve 60. Moreover, in case of rapid decompression the regulation valve 60 insulates the pressure vest branch 63 from the breathable gas branch 80 in one direction, i.e. gas can not flow from the pressure vest 51 to the breathable gas branch 80, for a time period of a few seconds. During this time period overpressure in the pressure vest 51, created either by decompression or pilot's inhalation, is directed to the environment 24. When the above mentioned period of time has lapsed, the regulation valve 53 returns to normal operation.

## Claims

1. A regulation valve for a life support system for use in an aircraft cabin comprising:
- a gas inlet (2, 61) for breathable gas (3),
- an air mask supply outlet (4, 62) connected to the gas inlet (2, 61) and adapted to direct breathable gas (5) to an air mask (52),
- a pressure vest branch (6, 63) interconnected between the gas inlet and an opening for connecting to a pressure vest (51) and adapted to direct breathable gas (7) to and from the pressure vest (51), **characterized by**
- a decompression valve (8) adapted to inhibit gas flow from the pressure vest branch (6, 63) to the air mask supply outlet (4, 62) if pressure in the aircraft cabin decreases below a predetermined value.
- a one-way valve (21) adapted to inhibit gas flow from the pressure vest branch (6, 63) to the air mask supply outlet (4, 62) at a predetermined pressure difference between the pressure vest branch (6, 63) and the gas inlet (2, 61) and
- a one-way dump valve (23) adapted to direct gas from the pressure vest branch (6, 63) to the environment (24) at a predetermined pressure difference between the pressure vest branch (6, 63) and the gas inlet (2, 61).

2. A regulation valve of claim 1,
comprising a pressure feed duct (25) adapted to direct pressurized air from the gas inlet (2, 61) to the dump valve (23) in a way that the dump valve (23) opens at a predetermined pressure difference between the pressure vest branch (6, 63) and the gas inlet (2, 61).

3. A regulation valve of claim 1 or 2,
wherein the decompression valve (8) is connected to a membrane (30) which is coupled to the pressure in the aircraft cabin in a way that the decompression valve (8) closes if the pressure in the aircraft cabin decreases rapidly.

4. A regulation valve of claim 3,
wherein a space on one side of the membrane (30) is connected with an opening to the aircraft cabin in a way that a pressure difference between two sides (33, 34) of the membrane (30) is compensated after a predetermined time for opening the decompression valve (8).

5. A regulation valve of one of the preceding claims,
wherein the decompression valve (8), the one-way valve (21) and/or the one-way dump valve (23) are integrated in the pressure vest branch (6, 63).

6. A life support system for use in an aircraft cabin comprising:a regulation valve according to claim 1.
- a pressure vest (51),
- an air mask (52),
- a breathing regulator (53) comprising
∘ a gas regulation inlet (54) for breathable gas and
∘ a gas regulation outlet (55) connected to the regulation valve (1, 60) and adapted to direct breathable gas to a regulation valve (1, 60), wherein the breathing regulator (53) is adapted to control the pressure in the regulation outlet (55).

7. A life support system of claim 6,
wherein an anti-g regulator unit (65) adapted to direct pressurized gas to an anti-g suit (66) is supplied with gas from the breathing regulator (53) and
wherein the anti-g regulator unit (65) is coupled to the breathing regulator (53) in a way that the anti-g suit is pressurized if the breathable gas pressure is increased.

8. A life support system of one of the preceding claims 6-7,
comprising a pressure sensor and/or an oxygen sensor adapted to monitor the life support system (50), wherein an electronic control unit (71) receives a pressure signal from the pressure sensor and/or an oxygen signal from the oxygen sensor for monitoring and/or controlling the breathing regulator (53).

9. A life support system of one of the preceding claims 6-8, comprising
an on-board oxygen generating system (70) adapted to supply the breathing regulator (53) with breathable gas and
a bleed air source (67) adapted to supply the on-board oxygen generating system (70) with breathable gas

10. A life support system of one of the preceding claims 6-9 comprising
an oxygen backup unit (76) adapted to supply the breathing regulator (53) with breathable oxygen enriched air if the pressure in the aircraft cabin decreases, wherein the breathing regulator (53) inhibits gas flow from the oxygen generating system (70) if pressure in the aircraft cabin decreases.

11. A life support system of one of the preceding claims 6-10,
comprising an actuator adapted to close the decompression valve if the pressure in the aircraft cabin decreases rapidly.

12. A method for operating a regulation valve of claim 1 for a life support system for use in an aircraft cabin, comprising the steps of:
- directing breathable gas from a gas inlet (2, 61) to an air mask supply outlet (4, 62) and to a pressure vest branch (6, 63) adapted to direct breathable gas (7) to and from a pressure vest (51),
- insulating the pressure vest (51) for a predetermined time if the pressure in the aircraft cabin decreases, in a way that
o gas flow from the pressure vest branch (6, 63) to the air mask supply outlet (4, 62) is inhibited,
o gas flow from the pressure vest branch (6, 63) is directed to the environment (24) at a predetermined pressure difference between the pressure vest branch (6, 63) and the gas inlet (2, 61) and
o gas flow is directed to the pressure vest branch (6, 63) at a predetermined pressure difference between the gas inlet (2, 61) and the pressure vest branch (6, 63).

13. A method of claim 12, with the step of
directing gas flow from the pressure vest branch (6, 63) to the air mask supply outlet (4, 62) at a predetermined time after insulating the pressure vest (51).

14. A method for operating a life support system with a regulation valve of claim 1 for use in an aircraft cabin, comprising the steps of:
- directing breathable gas from a gas supply to an air mask (52) and to a pressure vest (51) and,
- if the pressure in the aircraft cabin decreases:
∘ directing oxygen enriched gas to the air mask (52) and
∘ insulating the pressure vest (51), in a way that
■ gas flow from the pressure vest (51) to the air mask (52) is inhibited,
■ gas flow from the pressure vest (51) is directed to the environment (24) of the life support system (50) and
■ gas flow is directed to the pressure vest (51) at a predetermined pressure difference between the gas supply and the pressure vest (51).

15. A method of claim 14, with the step of
directing gas flow from the pressure vest (51) to the air mask (52) at a predetermined time after insulating the pressure vest (51).

## Patentansprüche

1. Regelventil für ein Lebenserhaltungssystem zur Verwendung in einer Flugzeugkabine, umfassend:
- einen Gaseinlass (2, 61) für ein atembares Gas (3),
- einen Versorgungsauslass für eine Atemmaske (4, 62), der mit dem Gaseinlass (2, 61) verbunden ist und ausgebildet ist, um atembares Gas (5) zu einer Atemmaske (52) zu leiten,
- einen Druckwestenabzweig (6, 63), der zwischen dem Gaseinlass und einer Öffnung für den Anschluss an eine Druckweste (51) verbunden ist und ausgebildet ist, um atembares Gas (7) zu und von einer Druckweste (51) zu leiten, **gekennzeichnet durch**
- ein Dekompressionsventil (8), das ausgebildet ist, den Gasstrom von dem Druckwestenabzweig (6, 63) zum Versorgungsauslass für die Atemmaske (4, 62) zu unterbinden, falls ein Druck in der Flugzeugkabine unter einen vorbestimmten Wert fällt,
- ein Einwegventil (21), das ausgebildet ist, bei einer vorbestimmten Druckdifferenz zwischen dem Druckwestenabzweig (6, 63) und dem Gaseinlass (2, 61) den Gasstrom vom Druckwestenabzweig (6, 63) zum Versorgungsauslass für die Atemmaske (4, 62) zu unterbinden, und
- ein Einweg-Ablassventil (23), das ausgebildet ist, bei einer vorbestimmten Druckdifferenz zwischen dem Druckwestenabzweig (6, 63) und dem Gaseinlass (2, 61), Gas aus dem Druckwestenabzweig (6, 63) in die Umgebung (24) zu leiten.

2. Regelventil nach Anspruch 1,
umfassend einen Druckführungskanal (25), der ausgebildet ist, um unter Druck stehende Luft vom Gaseinlass (2, 61) zum Ablassventil (23) zu leiten, sodass das sich das Ablassventil (23) bei einer vorbestimmten Druckdifferenz zwischen dem Druckwestenabzweig (6, 63) und dem Gaseinlass (2, 61) öffnet.

3. Regelventil nach Anspruch 1 oder 2,
wobei das Dekompressionsventil (8) mit einer Membran (30) verbunden ist, und wobei die Membran (30) an den Druck in der Flugzeugkabine gekoppelt ist, sodass sich das Dekompressionsventil (8) schließt, falls der Druck in der Flugzeugkabine schnell fällt.

4. Regelventil nach Anspruch 3,
wobei ein Bereich auf einer Seite der Membran (30) mit einer Öffnung zur Flugzeugkabine verbunden ist, sodass eine Druckdifferenz zwischen zwei Seiten (33, 34) der Membran (30) nach einer vorbestimmten Zeit durch Öffnen des Dekompressionsventils (8) ausgeglichen wird.

5. Regelventil nach einem der vorhergehenden Ansprüche,
wobei das Dekompressionsventil (8), das Einwegventil (21) und/oder das Einweg-Abassventil (23) in den Druckwestenabschnitt (6, 63) integriert sind.

6. Lebenserhaltungssystem zur Verwendung in einer Flugzeugkabine, umfassend: ein Regelventil nach Anspruch 1,
- eine Druckweste (51),
- eine Atemmaske (52) und
- einen Atemregler (53), umfassend:
o einen Gasregeleinlass (54) für atembares Gas und
o einen Gasregelauslass (55), der mit dem Regelventil (1, 60) verbunden ist und ausgebildet ist, atembares Gas zu einem Regelventil (1, 60) zu leiten, wobei der Atemregler (53) ausgebildet ist, den Druck im Regelauslass (55) zu kontrollieren.

7. Lebenserhaltungssystem nach Anspruch 6,
wobei eine Anti-g-Regeleinheit (65), die ausgebildet ist, unter Druck stehendes Gas an einen Anti-g-Anzug (66) zu leiten, mit Gas vom Atemregler (53) versorgt wird und
wobei die Anti-g-Regeleinheit (65) an den Atemregler (53) gekoppelt ist, sodass der Anti-g-Anzug unter Druck gesetzt wird, falls der Druck des atembaren Gases erhöht wird.

8. Lebenserhaltungssystem nach einem der vorangegangenen Ansprüche 6-7,
umfassend einen Drucksensor und/oder einen Sauerstoffsensor, der ausgebildet ist, das Lebenserhaltungssystem (50) zu überwachen, wobei eine elektronische Kontrolleinheit (71) ein Drucksignal vom Drucksensor und/oder ein Sauerstoffsignal vom Sauerstoffsensor zur Überwachung und/oder Kontrolle des Atemreglers (53) empfängt.

9. Lebenserhaltungssystem nach einem der vorangegangenen Ansprüche 6-8, umfassend
ein bordseitiges Sauerstoffgeneratorsystem (70), das ausgebildet ist, den Atemregler (53) mit atembaren Gas zu versorgen und
eine Zusatzluftquelle (67), die ausgebildet ist, das bordseitige Sauerstoffgeneratorsystem (70) mit atembarem Gas zu versorgen.

10. Lebenserhaltungssystem nach einem der vorangegangenen Ansprüche 6-9, umfassend
eine Sauerstoff-Reserveanlage (76), die ausgebildet ist, den Atemregler (53) mit atembarer, durch Sauerstoff angereicherter Luft zu versorgen, falls der Druck in der Flugzeugkabine fällt,
wobei der Atemregler (53) den Gasstrom vom Sauerstoffgeneratorsystem (70) unterbindet, falls der Druck in der Flugzeugkabine fällt.

11. Lebenserhaltungssystem nach einem der vorangegangenen Ansprüche 6-10,
umfassend einen Betätigungsglied, das ausgebildet ist, das Dekompressionsventil zu schließen, falls der Druck in der Flugzeugkabine schnell fällt.

12. Verfahren zum Betrieb eines Regelventils nach Anspruch 1 für ein Lebenserhaltungssystem zur Verwendung in einer Flugzeugkabine, umfassend die Schritte:
- Leiten von atembaren Gas von einem Gaseinlass (2, 61) zu einem Versorgungsauslass für eine Atemmaske (4, 62) und zu einem Druckwestenabzweig (6, 63), wobei der Druckwestenabzweig (6, 63) ausgebildet ist, um atembares Gas (7) zu und von einer Druckweste (51) zu leiten,
- Isolieren der Druckweste (51) für eine vorbestimmte Zeit, falls der Druck in der Flugzeugkabine fällt, sodass
o ein Gasstrom von dem Druckwestenabzweig (6, 63) zum Versorgungsauslass für eine Atemmaske (4, 62) unterbunden wird,
o ein Gasstrom bei einer vorbestimmten Druckdifferenz zwischen dem Druckwestenabzweig (6, 63) und dem Gaseinlass (2, 61) von dem Druckwestenabzweig (6, 63) in die Umgebung (24) geleitet wird und
o ein Gasstrom bei einer vorbestimmten Druckdifferenz zwischen dem Gaseinlass (2, 61) und dem Druckwestenabzeig (6, 63) zum Druckwestenabzweig (6, 63) geleitet wird.

13. Verfahren nach Anspruch 12, mit dem Schritt Leiten eines Gasstroms von dem Druckwestenabzweig (6, 63) zum Versorgungsauslass für eine Atemmaske (4, 62) zu einer vorbestimmten Zeit nach dem Isolieren der Druckweste (51).

14. Verfahren zum Betrieb eines Lebenserhaltungssystems mit einem Regelventil nach Anspruch 1 zur Verwendung in einer Flugzeugkabine, umfassend die Schritte:
- Leiten von atembaren Gas von einer Gasversorgung zu einer Atemmaske (52) und zu einer Druckweste (51) und,
- falls der Druck in der Flugzeugkabine fällt:
∘ Leiten von durch Sauerstoff angereichertem Gas zu der Atemmaske (52) und
∘ Isolieren der Druckweste (51), sodass
• ein Gasstrom von der Druckweste (51) zur Atemmaske (52) unterbunden wird
• ein Gasstrom von der Druckweste (51) in die Umgebung (24) des Lebenserhaltungssystems (50) geleitet wird
• ein Gasstrom bei einer vorbestimmten Druckdifferenz zwischen der Gasversorgung und der Druckweste (51) zur Druckweste (51) geleitet wird.

15. Verfahren nach Anspruch 14, mit dem Schritt Leiten eines Gasstroms von der Druckweste (51) zur Atemmaske (52) zu einer vorbestimmten Zeit nach dem Isolieren der Druckweste (51).

## Revendications

1. Soupape de régulation pour un système de survie destiné être utilisé dans une cabine d'avion comprenant :
- une entrée de gaz (2, 61) pour du gaz respirable (3),
- une sortie d'alimentation de masque à air (4, 62) reliée à l'entrée de gaz (2, 61) et adaptée pour diriger le gaz respirable (5) jusqu'à un masque à air (52),
- un branchement de gilet de pressurisation (6, 63) relié entre l'entrée de gaz et une ouverture destinée à relier un gilet de pressurisation (51) et adaptée pour diriger le gaz respirable (7) jusqu'au gilet de pressurisation (51) et depuis celui-ci, **caractérisée par**
- une soupape de décompression (8) adaptée pour empêcher le flux de gaz du branchement de gilet de pressurisation (6, 63) à la sortie d'alimentation de masque à air (4, 62) si la pression dans la cabine d'avion diminue sous une valeur prédéterminée,
- une soupape à une voie (21) adaptée pour empêcher le flux de gaz du branchement de gilet de pressurisation (6, 63) à la sortie d'alimentation de masque à air (4, 62) à une différence de pression prédéterminée entre le branchement de gilet de pressurisation (6, 63) et l'entrée de gaz (2, 61) et
- une soupape de décharge à une voie (23) adaptée pour diriger le gaz du branchement de gilet de pressurisation (6, 63) vers l'environnement (24) à une différence de pression prédéterminée entre le branchement de gilet de pressurisation (6, 63) et l'entrée de gaz (2, 61).

2. Soupape de régulation selon la revendication 1,
comprenant un conduit d'amenée de pression (25) adapté pour diriger l'air pressurisé de l'entrée de gaz (2, 61) à la soupape de décharge (23) de manière que la soupape de décharge (23) s'ouvre à une différence de pression prédéterminée entre le branchement de gilet de pressurisation (6, 63) et l'entrée de gaz (2, 61).

3. Soupape de régulation selon la revendication 1 ou 2,
dans laquelle la soupape de décompression (8) est reliée à une membrane (30) qui est couplée à la pression dans la cabine d'avion de manière que la soupape de décompression (8) se ferme si la pression dans la cabine d'avion diminue rapidement.

4. Soupape de régulation selon la revendication 3,
dans laquelle un espace sur un côté de la membrane (30) est relié par une ouverture à la cabine d'avion de manière qu'une différence de pression entre deux côtés (33, 34) de la membrane (30) soit compensée après un temps prédéterminé pour l'ouverture de la soupape de décompression (8).

5. Soupape de régulation selon l'une quelconque des revendications précédentes, dans laquelle la soupape de décompression (8), la soupape à une voie (21) et/ou la soupape de décharge à une voie (23) sont intégrées dans le branchement de gilet de pressurisation (6, 63).

6. Système de survie destiné à être utilisé dans un cabine d'avion comprenant : une soupape de régulation selon la revendication 1
- un gilet de pressurisation (51),
- un masque à air (52),
- un régulateur de respiration (53) comprenant
-- une entrée de régulation de gaz (54) pour le gaz respirable et
--une sortie de régulation de gaz (55) reliée à la soupape de régulation (1, 60) et adaptée pour diriger le gaz respirable jusqu'à une soupape de régulation (1, 60), dans lequel le régulateur de respiration (53) est adapté pour commander la pression dans la sortie de régulation (55).

7. Système de survie selon la revendication 6,
dans lequel une unité de régulation anti-g (66) adaptée pour diriger le gaz pressurisé jusqu'à une combinaison anti-g (66) est alimentée en gaz par le régulateur de respiration (53) et
dans lequel l'unité de régulation anti-g (65) est couplée au régulateur de respiration (53) de manière que la combinaison anti-g soit pressurisée si la pression du gaz respirable est augmentée.

8. Système de survie selon l'une quelconque des revendications 6 à 7, comprenant un capteur de pression et/ou un capteur d'oxygène adapté pour surveiller le système de survie (50), dans lequel une unité de commande électronique (71) reçoit un signal de pression du capteur de pression et/ou un signal d'oxygène du capteur d'oxygène pour surveiller et/ou commander le régulateur de respiration (53).

9. Système de survie selon l'une quelconque des revendications 6 à 8, comprenant un système de génération d'oxygène embarqué (70) adapté pour alimenter le régulateur de respiration (53) en gaz respirable et
une source d'air d'appoint (67) adaptée pour alimenter le système de génération d'oxygène embarqué (70) en gaz respirable.

10. Système de survie selon l'une quelconque des revendications 6 à 9, comprenant une unité de réserve d'oxygène (76) adaptée pour alimenter le régulateur de respiration (53) en air enrichi en oxygène respirable si la pression dans la cabine d'avion diminue, dans lequel le régulateur de respiration (53) empêche le flux de gaz du système de génération d'oxygène (70) si la pression dans la cabine d'avion diminue.

11. Système de survie selon l'une quelconque des revendications 6 à 10, comprenant un actionneur adapté pour fermer la soupape de décompression si la pression dans la cabine d'avion diminue rapidement.

12. Procédé de fonctionnement d'une soupape de régulation selon la revendication 1 pour un système de survie destiné à être utilisé dans une cabine d'avion, comprenant les étapes consistant à :
- diriger le gaz respirable d'une entrée de gaz (2, 61) à une sortie d'alimentation de masque à air (4, 62) et à un branchement de gilet de pressurisation (6, 63) adapté pour diriger le gaz respirable (7) vers et depuis un gilet de pressurisation (51),
- isoler le gilet de pressurisation (51) pour une durée prédéterminée si la pression dans la cabine d'avion diminue de manière que
-- le flux de gaz du branchement de gilet de pressurisation (6, 63) à la sortie d'alimentation de masque à air (4, 62) soit empêché,
-- le flux de gaz du branchement de gilet de pressurisation (6, 63) soit dirigé vers l'environnement (24) à une différence de pression prédéterminée entre le branchement de gilet de pressurisation (6, 63) et l'entrée de gaz (2, 61) et
-- le flux de gaz soit dirigé vers le branchement de gilet de pressurisation (6, 63) à une différence de pression prédéterminée entre l'entrée de gaz (2, 61) et le branchement de gilet de pressurisation (6, 63).

13. Procédé selon la revendication 12, avec l'étape consistant à diriger le flux de gaz du branchement de gilet de pressurisation (6, 63) jusqu'à la sortie d'alimentation de masque à air (4, 62) à un temps prédéterminé après l'isolation du gilet de pressurisation (51).

14. Procédé de fonctionnement d'un système de survie avec une soupape de régulation de la revendication 1 destiné à être utilisé dans une cabine d'avion, comprenant les étapes consistant à :
- diriger le gaz respirable d'une alimentation de gaz à un masque à air (52) et à un gilet de pressurisation (51) et
- si la pression dans la cabine d'avion diminue :
-- diriger le gaz enrichi en oxygène jusqu'au masque à air (52) et
-- isoler le gilet de pressurisation (51) de manière que
--- le flux de gaz du gilet de pressurisation (51) au masque à air (52) soit empêché,
--- le flux de gaz du gilet de pressurisation (51) soit dirigé jusqu'à l'environnement (24) du système de survie (50) et
--- le flux de gaz soit dirigé jusqu'au gilet de pressurisation (51) à une différence de pression prédéterminée entre l'alimentation de gaz et le gilet de pressurisation (51).

15. Procédé selon la revendication 14 comprenant l'étape consistant à diriger le flux de gaz du gilet de pressurisation (51) jusqu'au masque à air (52) à un temps prédéterminé après l'isolation du gilet de pressurisation (51).
